(19) Europäisches Patentamt
European Patent Office
Office européen des brevets

(11) **EP 2 355 400 A1**

(12) **DEMANDE DE BREVET EUROPEEN**

(43) Date de publication:
**10.08.2011 Bulletin 2011/32**

(51) Int Cl.:
*H04L 9/06* (2006.01)

(21) Numéro de dépôt: **11000240.9**

(22) Date de dépôt: **13.01.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **19.01.2010 FR 1000202**

(71) Demandeur: **STMicroelectronics (Rousset) SAS
13790 Rousset (FR)**

(72) Inventeur: **Romain, Fabrice
83560 Rians (FR)**

(74) Mandataire: **Marchand, André et al
OMNIPAT
24 Place des Martyrs de la Résistance
13100 Aix-en-Provence (FR)**

(54) **Procédé et dispositif de contremesure pour protéger des données circulant dans un composant électronique**

(57) L'invention concerne un procédé de contremesure dans un circuit intégré (IC) comprenant au moins un premier circuit logique (LC1) et au moins un premier registre d'entrée (RG01, RG02) fournissant une donnée au premier circuit logique, le procédé comprenant des étapes d'introduction d'une donnée aléatoire (A1, A2) dans chaque premier registre d'entrée du premier circuit logique et de lecture par le premier circuit logique de la donnée aléatoire dans chaque premier registre d'entrée, puis d'introduction d'une donnée à traiter dans chaque premier registre d'entrée, et de traitement par le premier circuit logique de la donnée dans chaque premier registre d'entrée.

Fig. 1

**Description**

La présente invention concerne un procédé de contremesure pour protéger des données sensibles circulant dans un composant électronique, contre des attaques visant à découvrir ces données. Elle concerne également un dispositif portable à microcircuit tel qu'une carte à puce, mettant en oeuvre le procédé.

Les données sensibles peuvent être notamment des clés de chiffrement ou de déchiffrement, et plus généralement des données cryptographiques utilisées ou élaborées lors de calculs cryptographiques, comme des données intermédiaires de tels calculs, et des identifiants qui doivent être conservés secrets.

Les dispositifs à microcircuit manipulant des données sensibles font parfois l'objet d'attaques visant à déterminer ces données. Parmi les attaques connues, les attaques de type SPA (Simple Power Analysis) ou DPA (differential Power Analysis) consistent à effectuer une analyse statistique de nombreuses mesures de courants et de tensions entrant et sortant dans le microcircuit lors de l'exécution d'un programme par le microcircuit avec des données d'entrée différentes. Les mesures obtenues sont exploitées pour en déduire des données protégées, traitées ou utilisées par le microcircuit. Dans ce même but, les attaques de type EMA (Electromagnetic Analysis) se basent sur l'analyse du rayonnement électromagnétique émis par le microcircuit.

On connaît également les attaques par injection de faute qui consistent à introduire des perturbations dans le microcircuit pendant qu'il exécute des algorithmes sensibles tels que des algorithmes cryptographiques, ou dans le but de déclencher l'exécution d'une routine de téléchargement émettant sur un port les données qu'il mémorise. Une telle perturbation peut être réalisée en appliquant au microcircuit un ou plusieurs éclairages brefs ou un ou plusieurs pics de tension sur l'un de ses contacts.

Afin de lutter contre ces attaques variées par nature, de nombreuses solutions très différentes les unes des autres ont été apportées. L'invention concerne plus particulièrement celles qui visent à protéger des données lorsqu'elles circulent dans un microcircuit.

A cet effet, il est connu de chiffrer chaque donnée sensible à la sortie d'une mémoire ou d'un registre ou avant de la transmettre sur un bus de donnée, et de déchiffrer la donnée à l'entrée d'un registre ou d'une mémoire ou à sa réception par une entité destinatrice de la donnée. En réalité, cette solution n'apporte qu'une protection partielle aux données transmises. En effet, entre la sortie du circuit de déchiffrement et l'entrée du registre ou de la mémoire, la donnée doit circuler dans des circuits tels que des portes logiques et des multiplexeurs qui produisent une signature visible par une attaque de type EMA ou SPA. L'opération d'écriture proprement dite dans la mémoire ou le registre peut également émettre une signature.

Il est également connu de précharger un registre devant recevoir une donnée sensible par une donnée générée aléatoirement pour changer l'état de certaines cellules de mémorisation, et ainsi modifier la signature émise lors de l'écriture d'une donnée à protéger dans le registre. La demande de brevet EP1475919 (US 2004/0162991) décrit un procédé antifraude consistant à injecter des données aléatoires dans des registres de sortie ou intermédiaires, avant que ceux-ci ne reçoivent des données sensibles. Cette solution présente l'inconvénient de nécessiter des registres et des multiplexeurs supplémentaires pour chaque registre à protéger. En outre cette solution protège des registres, mais pas les circuits logiques introduisant les données sensibles dans les registres protégés. Une attaque par analyse de signature peut donc permettre de détecter des commutations de portes logiques des circuits logiques, et donc de déterminer des données sensibles traitées par ces circuits.

La demande WO 02/063821 décrit un procédé de protection d'un calcul cryptographique consistant à ajouter au calcul cryptographique des étapes de masquage de données d'entrée et des étapes de démasquage pour restituer les données de sortie. Cette solution ne protège pas non plus les circuits logiques contre des attaques par analyse de signature.

Il est donc souhaitable de protéger des circuits logiques et des registres contre des attaques par analyse de signature, sans augmenter de manière sensible la complexité des circuits.

Un mode de réalisation concerne un procédé de contremesure dans un circuit intégré comprenant au moins un premier circuit logique et au moins un premier registre d'entrée fournissant une donnée à traiter au premier circuit logique, le procédé comprenant des étapes d'introduction d'une donnée à traiter dans chaque premier registre d'entrée, et de lecture par le premier circuit logique de la donnée dans chaque premier registre d'entrée. Selon un mode de réalisation, le procédé comprend des étapes préalables d'introduction d'une donnée aléatoire dans chaque premier registre d'entrée du premier circuit logique et de lecture par le premier circuit logique de la donnée aléatoire dans chaque premier registre d'entrée.

Selon un mode de réalisation, le procédé comprend plusieurs phases de traitement successives comportant chacune des étapes d'introduction dans chaque premier registre d'entrée d'une donnée aléatoire et de lecture par le circuit logique de la donnée aléatoire dans chaque premier registre d'entrée, et des étapes d'introduction dans chaque premier registre d'entrée d'une donnée à traiter et de lecture par le premier circuit logique de la donnée à traiter dans chaque premier registre d'entrée.

Selon un mode de réalisation, le procédé comprend des étapes successives d'introduction d'une donnée élaborée par le premier circuit logique à partir de chaque donnée aléatoire introduite dans chaque premier registre d'entrée, et d'une donnée élaborée par le premier circuit logique à partir de chaque donnée à traiter, dans au moins un second registre d'entrée d'un second circuit logique.

Selon un mode de réalisation, la donnée aléatoire et la donnée à traiter introduites successivement dans chaque premier registre d'entrée sont fournies lors d'étapes précédentes par un autre circuit logique relié à une sortie du premier circuit logique.

Selon un mode de réalisation, le procédé comprend des étapes d'introduction dans chaque premier registre d'entrée d'une donnée élaborée par le premier circuit logique lors d'une étape précédente à partir de la donnée aléatoire, puis d'une donnée élaborée par le premier circuit logique lors d'une étape précédente à partir de la donnée à traiter.

Selon un mode de réalisation, le premier circuit logique réalise des fonctions de chiffrement conformes au standard DES ou AES.

Des modes de réalisation concernent également un composant électronique comprenant au moins un premier circuit logique et au moins un premier registre d'entrée fournissant une donnée à traiter au premier circuit logique. Selon un mode de réalisation, le composant électronique comprend un dispositif de contremesure mettant en oeuvre le procédé défini précédemment. Selon un mode de réalisation, le composant électronique comprend un second circuit logique et au moins un second registre d'entrée connecté en entrée du second circuit logique et en sortie du premier circuit logique, des données élaborées par le premier circuit logique à partir des données aléatoires, et des données élaborées par le premier circuit logique à partir des données à traiter, étant introduites successivement dans les seconds registres d'entrée.

Selon un mode de réalisation, le composant électronique comprend un autre circuit logique relié à une sortie du premier circuit logique et fournissant successivement chaque donnée aléatoire, puis chaque donnée à traiter dans chaque premier registre.

Selon un mode de réalisation, le composant électronique comprend un registre supplémentaire connecté à chaque premier registre d'entrée du premier circuit logique pour recevoir successivement une donnée élaborée par le premier circuit logique à partir d'une donnée aléatoire, puis une donnée élaborée par le premier circuit logique à partir d'une donnée à traiter.

Selon un mode de réalisation, le premier circuit logique réalise des fonctions de chiffrement conformes au standard DES ou AES.

Des modes de réalisation concernent également un dispositif portable à microcircuit comprenant le composant électronique défini précédemment.

Des exemples de réalisation de l'invention seront décrits dans ce qui suit, à titre non limitatif en relation avec les figures jointes parmi lesquelles :

la figure 1 représente schématiquement un circuit de traitement de données d'un circuit intégré, équipé d'un dispositif de contremesure selon un mode de réalisation,

la figure 2 représente schématiquement un autre circuit de traitement de données, équipé d'un dispositif de contremesure selon un mode de réalisation,

la figure 3 représente schématiquement un autre circuit de traitement de données, équipé d'un dispositif de contremesure selon un mode de réalisation,

les figures 4 et 5 représentent schématiquement un circuit logique de calcul cryptographique, équipé d'un dispositif de contremesure selon deux modes de réalisation distincts,

les figures 6 et 7 représentent schématiquement un circuit logique de calcul cryptographique, équipé d'un dispositif de contremesure selon deux modes de réalisation distincts.

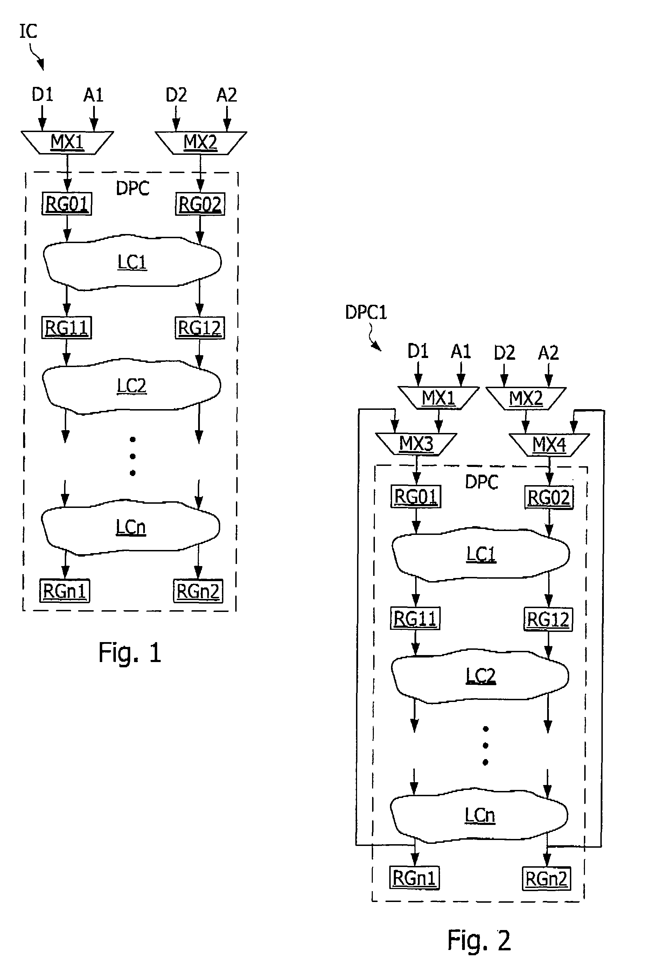

La figure 1 représente un exemple de circuit de traitement de données DPC d'un circuit intégré 1C. Le circuit DPC comprend des circuits logiques LC1, LC2, ... LCn interconnectés en chaîne pour effectuer une séquence d'opérations sur des données à traiter D1, D2 introduites dans des registres d'entrée RG01, RG02, et fournir des données de sortie dans des registres de sortie RGn1, RGn2. Chaque circuit logique LC1-LCn est connecté à des registres d'entrée et des registres de sortie pouvant constituer les registres d'entrée d'un circuit logique suivant dans la chaîne. Ainsi, le circuit LC1 est connecté en entrée aux registres d'entrée RG01, RG02 et en sortie à des registres RG11, RG12. Les registres RG11, RG12 sont connectés en entrée du circuit logique suivant LC2. Le circuit logique LCn constituant le dernier circuit de la chaîne fournit des données de sortie dans les registres de sortie RGn1, RGn2. Les données d'entrée D1, D2 sont traitées par le circuit suivant des cycles de traitement au cours de chacun desquels une donnée se propage à partir d'un registre RG01, RG02, RG11, RG12 dans un circuit LC1-LCn, jusqu'à un registre RG11, RG12 - RGn1, RGn2. Une donnée se propage ainsi du premier circuit LC1 de la chaîne, jusqu'au dernier circuit LCn et enfin dans les registres de sortie RG1 n, RG2n.

La figure 1 représente seulement deux registres d'entrée et/ou de sortie par circuit logique LC1-LCn par souci de clarté. Chaque circuit logique peut bien entendu comporter un seul ou plus de deux registres d'entrée et un seul ou plus de deux registres de sortie.

Selon un mode de réalisation, le circuit intégré 1C comprend un dispositif de contremesure comportant des multiplexeurs MX1, MX2 pour introduire dans les registres d'entrée RG01, RG02 de la chaîne de circuits logiques LC1-LCn, alternativement des données aléatoires A1, A2 et des données à traiter D1, D2. Chacun des multiplexeurs MX1, MX2 est connecté en sortie à l'un des registres d'entrée RG01, RG02, et comprend une entrée pour recevoir une donnée à traiter D1, D2 et une entrée pour recevoir une donnée de valeur aléatoire A1, A2. A chaque cycle de traitement, les multiplexeurs MX1, MX2 sont commandés pour introduire dans les registres d'entrée RG01, RG02 de la chaîne, alternativement des données de valeur aléatoire A1, A2, et des données à traiter D1, D2, A l'issue d'un certain nombre de cycles de traitement dépendant du nombre de circuits logiques LC1-LCn ainsi enchaînés, des données résultant des données aléatoires A1, A2 apparaissent dans les registres de sortie RG1n, RG2n, et à un cycle de traitement suivant, des données de sortie résultant des données à traiter D1, D2.

De cette manière, tous les registres de la chaîne de circuits logiques peuvent être chargés avec des données aléatoires avant de recevoir des données à traiter D1, D2 ou des données intermédiaires ou de sortie, résultant des données à traiter. De même, tous les circuits logiques de la chaîne sont traversés par des données aléatoires avant d'être traversés par des données à traiter D1, D2 ou des données intermédiaires ou de sortie résultant des données à traiter. Les transitions ou commutations de portes logiques ou de bascules des circuits logiques et des registres, se produisant lors de la propagation des données à traiter dans la chaîne, dépendent donc des valeurs des données aléatoires A1, A2 préalablement introduites dans la chaîne. Il en résulte que les signatures émises par ces transitions ou commutations apparaissent difficilement exploitables pour déterminer la valeur des données traitées.

La figure 2 représente un autre exemple de circuit de traitement de données DPC1 d'un intégré. Le circuit représenté sur la figure 2 diffère de celui de la figure 1 en ce qu'il assure un traitement itératif. A cet effet, les sorties du dernier circuit logique LCn de la chaîne sont rebouclées en entrée du premier circuit logique LC1 de la chaîne. Le circuit de traitement DPC1 comprend le circuit DPC, et des multiplexeurs MX3, MX4. Les multiplexeurs MX3, MX4 comportent chacun une entrée connectée à une sortie du dernier circuit logique LCn de la chaîne de circuits logiques du circuit DPC. Selon un mode de réalisation, le circuit DPC1 comprend un dispositif de contremesure. Le dispositif de contremesure comprend les multiplexeurs MX1, MX2 connectés chacun en sortie à une entrée des multiplexeurs MX3, MX4.

Comme dans le circuit de la figure 1, des données de valeur aléatoire A1, A2, sont introduites dans le circuit DPC1 par les multiplexeurs MX1, MX2, lors d'un premier cycle de traitement, puis des données à traiter D1, D2 lors d'un second cycle de traitement. A l'issue d'une première itération, correspondant à un certain nombre de cycles de traitement dépendant du nombre de circuits logiques LC1-LCn enchaînés, des données résultant des données aléatoires A1, A2, puis des données de sortie résultant des données à traiter D1, D2 apparaissent successivement en sortie du dernier circuit LCn de la chaîne et sont réintroduites durant deux cycles de traitement successifs dans les registres RG01, RG02 par les multiplexeurs MX3, MX4. Plusieurs itérations peuvent ainsi être exécutées par le circuit DPC1 sans que de nouvelles données aléatoires soient introduites à chaque itération.

Comme dans le circuit de la figure 1, tous les registres de la chaîne de circuits logiques peuvent ainsi être chargés avec des données aléatoires avant de recevoir des données à traiter D1, D2 ou des données intermédiaires ou de sortie résultant des données à traiter. De même, tous les circuits logiques de la chaîne sont traversés par des données aléatoires avant d'être traversés par des données à traiter D1, D2 ou des données intermédiaires ou de sortie résultant des données à traiter.

Il est à noter que d'autres agencements des multiplexeurs MX-MX4 peuvent être prévus sans changer le fonctionnement du circuit. Ainsi, les sorties du circuit logique LCn peuvent être connectées à des entrées des multiplexeurs MX1, MX2, et des données aléatoires peuvent être introduites à une entrée des multiplexeurs MX3, MX4. Les multiplexeurs MX1-MX4 peuvent également être remplacés par des multiplexeurs à trois entrées recevant respectivement une donnée à traiter, une donnée aléatoire et une sortie du circuit LCn.

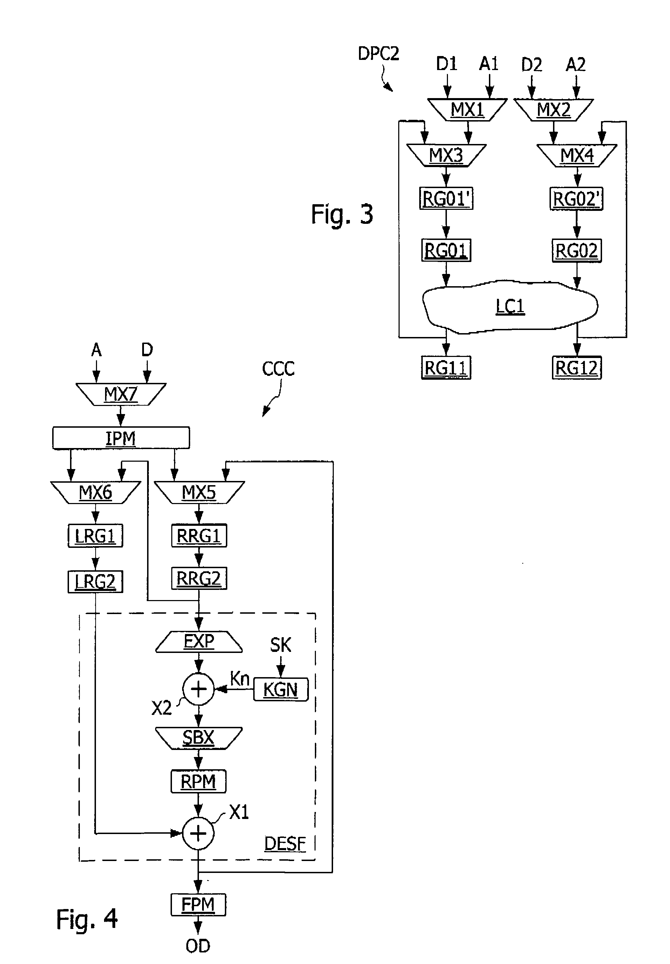

La figure 3 représente un autre exemple de circuit de traitement de données DPC2 d'un circuit intégré. Le circuit DPC2 diffère de celui de la figure 2 en ce qu'il ne comprend qu'un seul circuit logique sans registres internes, à savoir le circuit LC1 dont les sorties sont rebouclées directement en entrée du circuit LC1. Le circuit de traitement DPC2 comprend par ailleurs, les multiplexeurs MX3, MX4, et un dispositif de contremesure. Le dispositif de contremesure comprend les multiplexeurs MX1, MX2 connectés en sortie respectivement à une entrée des multiplexeurs MX3, MX4, et des registres RG01', RGO2' connectés respectivement aux sorties des multiplexeurs MX3, MX4 et aux registres RG01, RG02.

Comme dans le circuit de la figure 2, des données de valeur aléatoire A1, A2, sont introduites dans le circuit DPC2 par les multiplexeurs MX1, MX2, lors d'un premier cycle de traitement, puis des données à traiter D1, D2 lors d'un second cycle de traitement. Ainsi, au premier cycle de traitement, les registres RG01', RG02' reçoivent les données A1, A2. Au second cycle de traitement, les données A1, A2 sont transférées des registres RG01', RG02' dans les registres RG01, RG02, et les données à traiter D1, D2 sont introduites dans les registres RG01', RG02' ainsi libérés. A un troisième cycle de traitement, les données A1, A2 sont transférées dans le circuit LC1 qui produit de nouvelles données qui sont introduites dans les registres RG01' et RG02'. Parallèlement, les données D1, D2 sont transférées des registres RG01', RG02' dans les registres RG01, RG02. A un quatrième cycle de traitement, les données D1, D2 sont transférées dans le circuit LC1 qui produit de nouvelles données qui sont introduites dans les registres RG01' et RG02'. Parallèlement, les données A11, A12 sont transférées des registres RG01', RG02' dans les registres RG01, RG02. Plusieurs cycles de traitement des données D1, D2 peuvent ainsi être exécutés par le circuit DPC2 sans avoir à introduire de nouvelles données aléatoires tous les deux cycles de traitement.

Comme dans le circuit de la figure 2, tous les registres et les circuits logiques du circuit DPC2 peuvent ainsi être chargés avec des données aléatoires avant de recevoir des données à traiter D1, D2 ou des données intermédiaires ou de sortie résultant des données à traiter.

Il est à noter que d'autres agencements des registres RG01, RG02, RG01', RG02' et des multiplexeurs MX1-MX4 peuvent être envisagés sans modifier la fonction générale du circuit. Ainsi, les registres RG01', RG02' peuvent être disposés sur les lignes de retour du circuit LC1 en entrée des multiplexeurs MX3, MX4. Il importe simplement que le nombre de registres à chaque entrée du circuit logique LC1 soit égal ou supérieur à un, et lorsqu'une voie d'entrée est également une voie de retour entre une sortie et une entrée du circuit LC1, que le nombre de registres sur chaque voie de retour soit égal ou supérieur à deux. Ainsi les registres RG01' et RG02' peuvent être supprimés si l'on connecte en entrée des multiplexeurs MX3, MX4, non pas les sorties du circuit LC1, mais les registres de sortie RG11, RG12 de ce dernier. Egalement, les lignes de retour et les entrées de données aléatoires peuvent être interverties entre les multiplexeurs MX1 et MX3 d'une part, et d'autre part, entre les multiplexeurs MX2 et MX4. Le nombre d'entrées de données à traiter du circuit DPC2 peut également être égal à un ou supérieur à deux.

Dans les circuits représentés sur les figures 1 à 3, il peut être remarqué que le dispositif de contremesure ne comporte qu'un faible nombre de composants (un multiplexeur et éventuellement un registre par entrée de circuit).

Le dispositif de contremesure décrit en référence à la figure 2 ou 3 est adapté à la protection d'un circuit de calcul cryptographique itératif. Ainsi, la figure 4 représente un circuit de calcul cryptographique mettant en oeuvre le standard DES (Data Encryption Standard). Pour plus de détails sur le standard DES, on peut se référer au document "Data Encryption Standard FIPS PUB 46" publié le 15 janvier 1977. Sur la figure 4, le circuit de calcul cryptographique CCC comprend un circuit logique de permutation IPM mettant en oeuvre une fonction de permutation initiale conforme au standard DES, des multiplexeurs MX5, MX6, des registres d'entrée RRG1, LRG1, un circuit logique DESF mettant en oeuvre une fonction cryptographique du standard DES, et un circuit logique de permutation FPM mettant en oeuvre une fonction de permutation finale conforme au standard DES.

Selon un mode de réalisation, le circuit CCC comprend un dispositif de contremesure comportant un multiplexeur MX7, et des registres RRG2, LRG2. Le multiplexeur MX7 reçoit en entrée une donnée à chiffrer D et une donnée de valeur aléatoire A. La sortie du multiplexeur MX7 est connectée à une entrée du circuit IPM. Le circuit IPM comprend deux sorties connectées à une entrée des multiplexeurs MX5 et MX6, respectivement. Une sortie du multiplexeur MX5 est connectée au registre RRG1, lequel est connecté au registre RRG2. Le registre RRG2 est connecté à une entrée du multiplexeur MX6 et à une entrée du circuit DESF. La sortie du multiplexeur MX6 est connectée au registre LRG1, lequel est connecté au registre LRG2. Le registre LRG2 est connecté à une entrée du circuit DESF. Une sortie du circuit DESF est connectée à une entrée du multiplexeur MX5 et à une entrée du circuit FPM qui fournit une donnée chiffrée OD.

Le circuit DESF comprend d'une manière classique un circuit logique d'expansion EXP, deux additionneurs de type OU Exclusif X1, X2, un circuit logique de substitution SBX, et un circuit de permutation RPM. Le circuit EXP est connecté au registre RRG2 et convertit par des opérations logiques, par exemple un mot de 32 bits en entrée en un mot de 48 bits. Une sortie du circuit EXP est connectée à une entrée de l'additionneur X2. Une autre entrée de l'additionneur X2 reçoit une clé secrète Kn, par exemple de 48 bits, générée à partir d'une clé de chiffrement SK pour une itération de traitement de chiffrement par un générateur de clé KGN conforme au standard DES. Une sortie de l'additionneur X2 est connectée à une entrée du circuit SBX qui réalise des opérations logiques de substitution convertissant le mot d'entrée, par exemple de 48 bits en un mot de 32 bits. Une sortie du circuit SBX est connectée à une entrée du circuit RPM. Une sortie du circuit RPM est connectée avec le registre LRG2 à des entrées de l'additionneur X1 dont une sortie est connectée à la sortie du circuit DESF.

Le contenu des registres du circuit CCC à différents cycles de calcul cryptographique est indiqué dans le tableau 1 suivant :

Tableau 1

| Cycle № | RRG1 | RRG2 | LRG1 | LRG2 |
|---------|------|------|------|------|
| 1 | AR0 | / | AL0 | / |
| 2 | DR0 | AR0 | DL0 | AL0 |
| 3 | AR1 | DR0 | AR0 | DL0 |
| 4 | DR1 | AR1 | DR0 | AR0 |
| ... | ... | ... | ... | ... |

(suite)

| Cycle № | RRG1 | RRG2 | LRG1 | LRG2 |
|---------|------|------|------|------|
| 2n+1 | ARn | DRn-1 | ARn-1 | DRn-2 |
| 2n+2 | DRn | ARn | DRn-1 | ARn-1 |

Lors d'un premier cycle de calcul, une donnée aléatoire A est introduite dans le circuit de calcul CCC par le multiplexeur MX7. La donnée A est traitée par le circuit IPM et divisée en une partie droite AR0 introduite dans le registre RRG1 et une partie gauche ALO introduite dans le registre LRG1. Lors d'un second cycle de calcul, les données dans les registres RRG1, LRG1 sont transférées dans les registres RRG2, LRG2, et le multiplexeur MX7 introduit une donnée à chiffrer D dans le circuit CCC. La donnée D est à son tour traitée par le circuit IPM et divisée en une partie droite DR0 introduite dans le registre RRG1 et une partie gauche DLO introduite dans le registre LRG1. Lors d'un troisième cycle de calcul, les données AR0, AL0 dans les registres RRG2, LRG2 sont fournies au circuit DESF. Les données DR0, AR0, DLO dans les registres RRG1, RRG2, LRG1 sont transférées respectivement dans les registres RRG2, LRG1, LRG2. L'additionneur X1 fournit une nouvelle donnée AR1 obtenue à partir des données AR0, AL0 de la manière suivante :

$$AR1 = AL0 \oplus F(AR0,K0) \qquad (1)$$

dans laquelle $\oplus$ est l'opérateur OU Exclusif, K0 est une première clé générée à partir de la clé de chiffrement SK par le générateur KGN, et

$$F(X,K) = RPM(SBX(EXP(X) \oplus K))) \qquad (2)$$

RPM, SBX et EXP étant les fonctions représentées sur la figure 4.

La donnée obtenue AR1 en sortie de l'additionneur X1 est transférée dans le registre RRG1.

Lors d'un quatrième cycle de calcul, les données DR0, DLO dans les registres RRG2, LRG2 sont fournies au circuit DESF. Les données AR1, DR0, AR0 dans les registres RRG1, RRG2, LRG1 sont transférées respectivement dans les registres RRG2, LRG1, LRG2. L'additionneur X1 fournit une nouvelle donnée DR1 obtenue à partir des données DR0, DLO de la manière suivante :

$$DR1 = DL0 \oplus F(DR0,K0) \qquad (3)$$

La donnée DR1 obtenue en sortie de l'additionneur X1 est transférée dans le registre RRG1.

Lors d'un cycle de calcul 2n+1, les registres RRG1, RRG2, LRG1, LRG2 contiennent les données DRn-1, ARn-1, DRn-2, ARn-2. Les données ARn-1, ARn-2 sont introduites dans le circuit DESF et les données DRn-1, ARn-1, DRn-2 sont transférées dans les registres RRG2, LRG1, LRG2. L'additionneur X1 fournit la donnée ARn obtenue de la manière suivante :

$$ARn = (ARn-2) \oplus F(ARn-1,Kn) \qquad (4)$$

dans laquelle Kn est une nième clé générée à partir de la clé de chiffrement SK par le générateur KGN. La donnée ARn obtenue est transférée dans le registre RRG1.

Lors d'un cycle de calcul 2n+2, les données DRn-1, DRn-2 sont envoyées au circuit DESF et les données ARn, DRn-1, ARn-1 dans les registres RRG1, RRG2, LRG1 sont transférées dans les registres RRG2, LRG1, LRG2. L'additionneur X1 fournit la donnée DRn obtenue de la manière suivante :

$$DRn = (DRn-2) \oplus F(DRn-1,Kn) \qquad (5)$$

La donnée DRn obtenue est transférée dans le registre RRG1.

Il peut être observé dans le tableau 1 que chaque registre est occupé alternativement à chaque cycle de calcul soit par une donnée résultant de la valeur aléatoire initiale A, soit par une donnée résultant de la donnée à chiffrer D.

Aucune des formules (1) et (3) à (5) précédentes ne fait référence à la fois à des données résultant de la donnée à traiter D et à des données résultant de la donnée aléatoire A. Par ailleurs, le circuit DESF reçoit à chaque cycle de calcul soit des données résultant de la donnée aléatoire initiale A, soit des données résultant de la donnée à chiffrer D. Il peut être observé également qu'une nouvelle clé SKn est générée tous les deux cycles de calcul.

D'après les formules (4) et (5), le circuit CCC calcule les termes d'une suite récurrente d'ordre deux (chaque terme de la suite de rang n est calculé en fonction des termes précédents de rangs n-1 et n-2 de la suite). Les quatre registres RRG1, RRG2, LRG1, LRG2 sont donc prévus pour mémoriser alternativement les termes n-1 et n-2 d'une suite de données résultant de la donnée aléatoire A, et les termes n-1 et n-2 d'une suite de données résultant de la donnée à traiter D.

Ici encore, d'autres agencements des multiplexeurs et des registres peuvent être prévus sans modifier la fonction générale du circuit CCC. Ainsi, l'un des registres RRG1, RRG2 peut être interposé sur la liaison entre l'additionneur X1 et l'entrée du multiplexeur MX5, et l'un des registres LRG1, LRG2 peut être interposé sur la liaison entre l'entrée du circuit DESF et l'entrée du multiplexeurs MX6. Cette solution présente l'avantage d'obtenir une itération de calcul de la donnée à traiter au troisième cycle de calcul au lieu du quatrième.

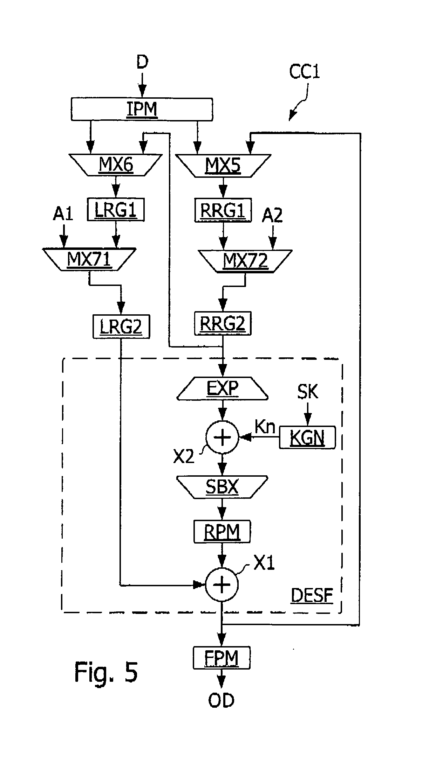

Un cycle de calcul peut être également économisé en introduisant des données aléatoires directement dans les registres LRG2 et RRG2. Ainsi, la figure 5 représente un circuit de calcul cryptographique CC1 qui diffère du circuit CCC en ce que le multiplexeur MX7 est supprimé et en ce que deux multiplexeurs MX71, MX72 sont insérés respectivement entre les registres LRG1 et LRG2, et entre les registres RRG1 et RRG2. Lors d'un premier cycle de calcul, chacun des registres MXT1, MX72 reçoit une donnée aléatoire A1, A2, tandis que les registres LRG1 et LRG2 reçoivent une donnée issue de la donnée à traiter D. Le traitement est poursuivi aux cycles suivants comme décrit précédemment en référence à la figure 4.

Le traitement de déchiffrement conforme au standard DES est identique au traitement de chiffrement, mis à part que les clés SKn sont générées dans un ordre inverse de celui dans lequel elles ont été générées lors du chiffrement. Le circuit CCC ou CC1 peut donc être également utilisé pour le déchiffrement d'une donnée.

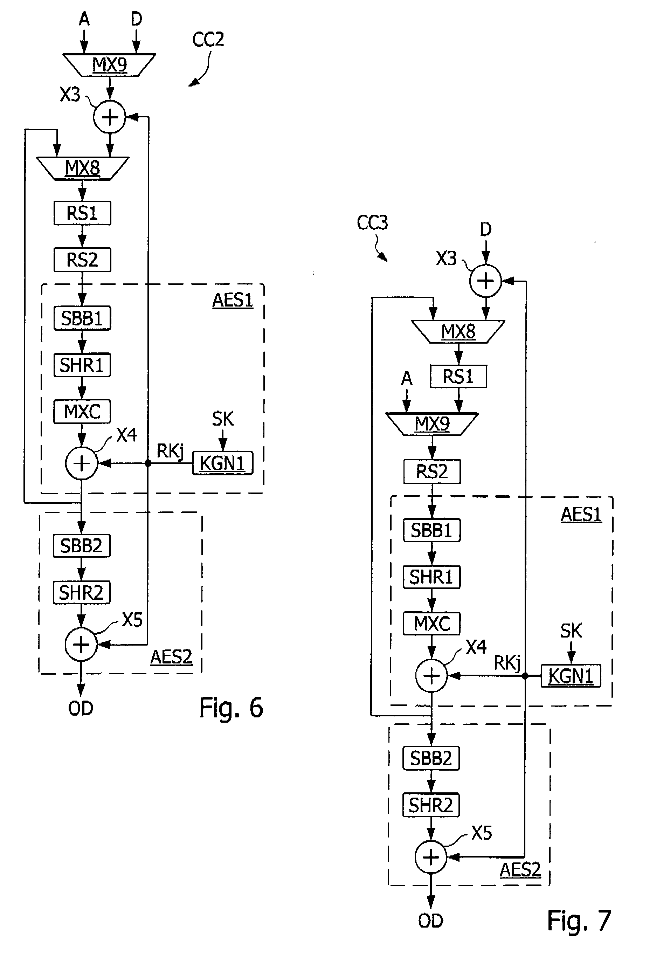

Le dispositif de contremesure décrit en référence à la figure 2 ou 3 est également adapté à la protection d'un circuit de calcul cryptographique itératif mettant en oeuvre le standard AES (Advanced Encryption Standard). La figure 6 représente un circuit de calcul cryptographique mettant en oeuvre le standard AES. Pour plus de détails sur le standard AES, on peut se référer au document "Advanced Encryption Standard FIPS PUB 197" publié le 26 novembre 2001. Sur la figure 6, le circuit de calcul cryptographique CC2 comprend un additionneur de type OU Exclusif X3, un multiplexeur MX8, un registre RS1, et deux circuits logiques AES1, AES2 mettant en oeuvre des fonctions cryptographiques du standard AES, le circuit logique AES2 fournissant une donnée chiffrée OD. Le circuit AES1 comprend un premier circuit de calcul de substitution SBB1, un premier circuit de calcul de permutation circulaire par ligne SHR1, un circuit de calcul de permutation par colonne MXC, un additionneur de type OU Exclusif X4, et un générateur de clé KGN1. Le circuit AES2 comprend un second circuit logique de calcul de substitution SBB2, un second circuit de calcul de permutation circulaire par ligne SHR2, et un additionneur de type OU Exclusif X5. Les circuits logiques SBB1, SHR1, MXC, SBB2, SHR2 et KGN1 sont conformes au standard AES.

Selon un mode de réalisation, le circuit CC2 comprend un dispositif de contremesure comportant un multiplexeur MX9 et un registre RS2. Le multiplexeur MX9 reçoit en entrée une donnée à chiffrer D et une donnée de valeur aléatoire A. La sortie du multiplexeur MX9 est connectée à une entrée de l'additionneur X3 recevant sur une autre entrée une clé RKj fournie par le générateur de clé KGN1. La sortie de l'additionneur X3 est connectée à une entrée du multiplexeur MX8. La sortie du multiplexeur MX8 est connectée au registre RS1 qui est connecté au registre RS2. Le registre RS2 est connecté à une entrée du circuit SBB1. Une sortie du circuit SBB1 est connectée à une entrée du circuit SHR1. Une sortie du circuit SHR1 est connectée à une entrée du circuit MXC. Une sortie du circuit MXC est connectée à une entrée de l'additionneur X4 recevant sur une autre entrée la clé RKj fournie par le générateur de clé KGN1. Une sortie de l'additionneur X4 est connectée à une entrée du multiplexeur MX8 et à une entrée du circuit SBB2 dont une sortie est connectée à une entrée du circuit SHR2. Une sortie du circuit SHR2 est connectée à une entrée de l'additionneur X5 recevant sur une autre entrée une dernière clé RKn fournie par le générateur de clé KGN1. Lorsqu'un certain nombre de cycles de calcul ont été effectués (10, 12 ou 14, conformément au standard AES) par le circuit AES1, la sortie de l'additionneur X4 est introduite dans le circuit AES2 lequel fournit une donnée chiffrée OD. L'un des registres RS1, RS2 peut également être interposé sur la liaison entre la sortie de l'additionneur X4 et l'entrée du multiplexeur MX8.

Lors d'un premier cycle de calcul, une donnée aléatoire A est introduite dans le circuit de calcul CC2 par le multiplexeur MX9. La donnée A est traitée par l'additionneur X3 qui lui ajoute une première clé RK0 générée par le circuit KGN1 à partir d'une clé secrète SK. L'additionneur X3 fournit une donnée A ⊕ RKO qui est mémorisée dans le registre RS1. Lors d'un second cycle de calcul, une donnée à chiffrer D est introduite dans le circuit de calcul CC2 par le multiplexeur MX9. La donnée D est traitée par l'additionneur X3 qui lui ajoute la première clé RKO. L'additionneur X3 fournit une donnée D ⊕ RKO. La donnée A ⊕ RKO est transférée dans le registre RS2 et la donnée D ⊕ RKO est mémorisée dans le registre RS1, Lors d'un troisième cycle de calcul, la donnée A ⊕ RKO est traitée par le circuit AES1.

La donnée D ⊕ RK0 est transférée dans le registre RS2 et la donnée résultante fournie par l'additionneur X4 est transférée dans le registre RS1. Lors d'un quatrième cycle de calcul, la donnée D ⊕ RKO est traitée par le circuit AES1. La donnée résultant de la donnée A dans le registre RS1 est transférée dans le registre RS2 et la donnée résultant de la donnée D fournie par l'additionneur X4 est transférée dans le registre RS1. Lors d'un cycle de calcul 2n+1, n étant le nombre d'itérations à effectuer sur une donnée pour la chiffrer, l'additionneur X5 fournit une donnée dépendant uniquement de la donnée aléatoire A. Lors d'un cycle de calcul 2n+2, l'additionneur X5 fournit une donnée chiffrée dépendant uniquement de la donnée D.

Dans le circuit CC2, chaque registre RS1, RS2 est occupé alternativement à chaque cycle de calcul soit par une donnée dépendant de la donnée aléatoire A, soit par une donnée dépendant de la donnée à chiffrer D. Les circuits AES1, AES2 sont également traversés alternativement soit par une donnée dépendant de la donnée aléatoire A, soit par une donnée dépendant de la donnée à chiffrer D.

Le circuit CC2 calcule les termes d'une suite récurrente d'ordre un (chaque terme de la suite de rang n est calculé en fonction du terme précédent de rang n-1 de la suite). Seuls deux registres RS1, RS2 sont donc prévus pour mémoriser les termes n-1 résultant de la donnée aléatoire A et de la donnée à traiter D.

Ici encore, une donnée aléatoire A peut être introduite directement dans le registre RS2, au lieu d'être introduite dans le registre RS1, ce qui permet également d'économiser un cycle de calcul. Ainsi, la figure 7 représente un circuit de calcul cryptographique CC3 qui diffère du circuit CC2 en ce que le multiplexeur MX9 est placé non pas en entrée du circuit mais entre les registres RS1 et RS2. Lors d'un premier cycle de calcul, le registre MX9 reçoit une donnée aléatoire A, tandis que le registre LS1 reçoit une donnée issue de la donnée à traiter D. Le traitement est poursuivi aux cycles suivants comme décrit précédemment en référence à la figure 6. Le générateur de clés KGN1 est également modifié par rapport à celui de la figure 6, de manière à fournir la première clé RK0 une seule fois au lieu de deux fois.

Un circuit de déchiffrement conforme au standard AES peut être réalisé d'une manière analogue au circuit de chiffrement CC2 ou CC3, en remplaçant les circuits SBB1, SBB2, SHR1, SHR2 et MXC par des circuits réalisant des opérations inverses.

Il apparaîtra clairement à l'homme de l'art que la présente invention est susceptible de diverses variantes de réalisation et diverses applications. En particulier, l'invention n'est pas limitée à la mise en oeuvre d'un multiplexeur pour introduire alternativement dans un registre ou dans un circuit logique une donnée aléatoire et une donnée à traiter. D'autres composants assurant cette fonction peuvent aisément être imaginés par l'homme de l'art.

La présente invention s'applique non seulement à un circuit intégré, mais également à tout composant nécessitant une protection contre des attaques visant à découvrir des données secrètes.

## Revendications

**1.** Procédé de contremesure dans un circuit intégré (IC) comprenant au moins un premier circuit logique (LC1-LCn, DESF, AES1) et au moins un premier registre d'entrée (RG01, RG02, LRG1, RRG1, LRG2, RRG2, RS1, RS2) fournissant une donnée à traiter (D, D1, D2) au premier circuit logique, le procédé comprenant des étapes d'introduction d'une donnée à traiter dans chaque premier registre d'entrée, et de lecture par le premier circuit logique de la donnée dans chaque premier registre d'entrée,

**caractérisé en ce qu'**il comprend des étapes préalables d'introduction d'une donnée aléatoire (A, A1, A2) dans chaque premier registre d'entrée (RG01, RG02, LRG1, RRG1, LRG2, RRG2, RS1, RS2) du premier circuit logique (LC1, DESF, AES1) et de lecture par le premier circuit logique de la donnée aléatoire dans chaque premier registre d'entrée.

**2.** Procédé selon la revendication 1, comprenant plusieurs phases de traitement successives comportant chacune des étapes d'introduction dans chaque premier registre d'entrée (RG01, RG02) d'une donnée aléatoire (A1, A2) et de lecture par le circuit logique (LC1) de la donnée aléatoire dans chaque premier registre d'entrée, et des étapes d'introduction dans chaque premier registre d'entrée d'une donnée à traiter (D1, D2) et de lecture par le premier circuit logique de la donnée à traiter dans chaque premier registre d'entrée.

**3.** Procédé selon l'une des revendications 1 ou 2, comprenant des étapes successives d'introduction d'une donnée élaborée par le premier circuit logique (LC1) à partir de chaque donnée aléatoire (A1, A2) introduite dans chaque premier registre d'entrée, et d'une donnée élaborée par le premier circuit logique (LC1) à partir de chaque donnée à traiter (D1, D2), dans au moins un second registre d'entrée (RG11, RG12) d'un second circuit logique (LC2).

**4.** Procédé selon l'une des revendications 1 à 3, dans lequel la donnée aléatoire (A1, A2) et la donnée à traiter (D1, D2) introduites successivement dans chaque premier registre d'entrée (RG01, RG02) sont fournies lors d'étapes précédentes par un autre circuit logique (LCn) relié à une sortie du premier circuit logique.

5. Procédé selon la revendication 1, comprenant des étapes d'introduction dans chaque premier registre d'entrée (RG01, RG02, RRG1, LRG1, RS1) d'une donnée élaborée par le premier circuit logique (LC1, DESF, AES1) lors d'une étape précédente à partir de la donnée aléatoire (A, A1, A2), puis d'une donnée élaborée par le premier circuit logique lors d'une étape précédente à partir de la donnée à traiter (D, D1, D2).

6. Procédé selon la revendication 5, dans lequel le premier circuit logique (DESF, AES1) réalise des fonctions de chiffrement conformes au standard DES ou AES.

7. Composant électronique comprenant au moins un premier circuit logique (LC1-LCn, DESF, AES1) et au moins un premier registre d'entrée (RG01, RG02, RRG1, RS1) fournissant une donnée à traiter (D, D1, D2) au premier circuit logique,
**caractérisé en ce qu'**il comprend un dispositif de contremesure mettant en oeuvre le procédé selon l'une des revendications 1 à 6.

8. Composant électronique selon la revendication 7, comprenant un second circuit logique (LC2-LCn) et au moins un second registre d'entrée (RG11, RG12) connecté en entrée du second circuit logique et en sortie du premier circuit logique (LC1), des données élaborées par le premier circuit logique (LC1) à partir des données aléatoires (A1, A2), et des données élaborées par le premier circuit logique (LC1) à partir des données à traiter (D1, D2), étant Introduites successivement dans les seconds registres d'entrée.

9. Composant électronique selon l'une des revendications 7 et 8, comprenant un autre circuit logique (LCn) relié à une sortie du premier circuit logique et fournissant successivement chaque donnée aléatoire (A1, A2), puis chaque donnée à traiter (D1, D2) dans chaque premier registre (RG01, RG02).

10. Composant électronique selon la revendication 7, comprenant un registre supplémentaire (RG01', RG02', LRG2, RRG2, RS2) connecté à chaque premier registre d'entrée (RG09, RG02, LRG1, RRG1, RS1) du premier circuit logique (LC1, DESF, AES1) pour recevoir successivement une donnée élaborée par le premier circuit logique à partir d'une donnée aléatoire (A, A1, A2), puis une donnée élaborée par le premier circuit logique à partir d'une donnée à traiter (D, D1, D2).

11. Composant électronique selon la revendication 10, dans lequel le premier circuit logique (DESF, AES1) réalise des fonctions de chiffrement conformes au standard DES ou AES.

12. Dispositif portable à microcircuit, **caractérisé en ce qu'**il comprend un composant électronique (IC) selon l'une des revendications 7 à 11.

IC

D1    A1        D2    A2

MX1            MX2

DPC

RG01            RG02

LC1

RG11            RG12

LC2

⋮

LCn

RGn1            RGn2

Fig. 1

DPC1

D1    A1    D2    A2

MX1        MX2

MX3        MX4

DPC

RG01            RG02

LC1

RG11            RG12

LC2

⋮

LCn

RGn1            RGn2

Fig. 2

Fig. 3

Fig. 4

Fig. 5

Fig. 6

Fig. 7

Europäisches
Patentamt

European
Patent Office

Office européen
des brevets

**RAPPORT DE RECHERCHE EUROPEENNE**

Numéro de la demande

EP 11 00 0240

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | JP 2007 195132 A (SONY CORP) 2 août 2007 (2007-08-02) * le document en entier * ----- | 1-12 | INV. H04L9/06 |
| Y,D | EP 1 475 919 A2 (ST MICROELECTRONICS SA [FR]) 10 novembre 2004 (2004-11-10) * INPUT OR OUTPUT REGISTERS ARE INITIALIZED BY RANDOM NUMBERS; alinéa [0012] * * alinéa [0025] - alinéa [0030] * * alinéas [0039] - [0043] * ----- | 1-12 | |
| Y | WO 00/19657 A1 (KONINKL PHILIPS ELECTRONICS NV [NL]; PHILIPS CORP INTELLECTUAL PTY [DE) 6 avril 2000 (2000-04-06) * page 2, ligne 24 - page 3, ligne 34 * ----- | 1,7,12 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 14 juin 2011 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 00 0240

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-06-2011

| Document brevet cité au rapport de recherche | | Date de publication | Membre(s) de la famille de brevet(s) | | Date de publication |
|---|---|---|---|---|---|
| JP 2007195132 | A | 02-08-2007 | AUCUN | | |
| EP 1475919 | A2 | 10-11-2004 | US | 2004162991 A1 | 19-08-2004 |
| WO 0019657 | A1 | 06-04-2000 | EP | 1044534 A1 | 18-10-2000 |
| | | | JP | 2002526849 T | 20-08-2002 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1475919 A
- US 20040162991 A

- WO 02063821 A

**Littérature non-brevet citée dans la description**

- *Data Encryption Standard FIPS PUB 46,* 15 Janvier 1977

- *Advanced Encryption Standard FIPS PUB 197,* 26 Novembre 2001